# EUROPEAN PATENT APPLICATION

(11) **EP 4 195 845 A1**
(43) Date of publication of application: **14.06.2023**
(21) Application number: 21853349.5
(22) Date of filing: 05.08.2021
(51) Int. Cl.: H04W 72/12, H04W 4/06

(54) **SPS PDSCH TYPE INDICATION METHOD, AND APPARATUS, TERMINAL AND NETWORK-SIDE DEVICE**

(30) Priority: 06.08.2020 CN 202010784846
(71) Applicant: Vivo Mobile Communication Co., Ltd., Dongguan, Guangdong 523863 (CN)
(72) Inventor: LI, Na, Dongguan, Guangdong 523863 (CN)
(74) Representative: Murgitroyd & Company
(86) International application number: PCT/CN2021/110819
(87) International publication number: WO 2022/028521

(57) **Abstract**

This application discloses an SPS PDSCH type indication method and apparatus, a terminal, and a network side device. The SPS PDSCH type indication method includes: indicating, by a network side device, a type of an SPS PDSCH to a terminal, where the type includes a multicast SPS PDSCH for multicast transmission or a unicast SPS PDSCH for unicast transmission.

## Description

### CROSS-REFERENCE

This application claims priority to Chinese Patent Application NO. 202010784846.4, filed with the China National Intellectual Property Administration on August 06, 2020 and entitled "SPS PDSCH TYPE INDICATION METHOD AND APPARATUS, TERMINAL, AND NETWORK SIDE DEVICE", which is incorporated herein by reference in its entirety.

### TECHNICAL FIELD

This application pertains to the field of wireless communications technologies, and specifically relates to an SPS PDSCH type indication method and apparatus, a terminal, and a network side device.

### BACKGROUND

For transmission of a semi-persistent scheduling (Semi-Persistent Scheduling, SPS) physical downlink shared channel (Physical Downlink Shared Channel, PDSCH), some parameters of downlink (Downlink, DL) SPS are configured by a higher layer, and transmission is activated by using downlink control information (Downlink Control Information, DCI). After downlink SPS transmission is activated, PDSCH transmission is periodically initiated, and these PDSCH transmissions have no corresponding DCI indication.

A terminal may configure one or more DL SPSs on one or more serving cells (serving cell), each DL SPS corresponds to one configuration index, and a periodicity of each SPS PDSCH may be at least one slot. A plurality of simultaneously activated DL SPS configurations help reduce a latency and provide a possibility for support of a plurality of different service types by UE.

In the related art, after the DL SPS is configured, a specific unicast DCI format scrambled by using a configured scheduling radio network temporary identifier (Configured Scheduling Radio Network Temporary Identifier, CS-RNTI) is activated, for example, a DCI format 1_0, a DCI format 1_1, and a DCI format 1_2. The SPS PDSCH is scrambled by using a radio network temporary identifier (Radio Network Temporary Identifier, RNTI) that is the same as that of DCI for activation. However, when the DL SPS is used to schedule a multicast broadcast service (Multicast Broadcast Service, MBS), the SPS PDSCH needs to perform scrambling by using a sequence common to a multicast terminal, for example, a group RNTI (Group RNTI, g-RNTI). However, in the related art, the terminal cannot determine whether the SPS PDSCH is used for unicast transmission or multicast transmission (also referred to as multicast), or the terminal cannot determine an RNTI used for scrambling the SPS PDSCH.

### SUMMARY

Embodiments of this application provide an SPS PDSCH type indication method and apparatus, a terminal, and a network side device, to resolve a problem that a terminal cannot determine whether an SPS PDSCH is used for unicast transmission or multicast transmission.

According to a first aspect, an SPS PDSCH type indication method is provided. The method includes: indicating, by a network side device, a type of an SPS PDSCH to a terminal, where the type includes a multicast SPS PDSCH for multicast transmission or a unicast SPS PDSCH for unicast transmission.

According to a second aspect, an SPS PDSCH type indication apparatus is provided, including: an indication module, configured to indicate a type of an SPS PDSCH to a terminal, where the type includes a multicast SPS PDSCH for multicast transmission or a unicast SPS PDSCH for unicast transmission.

Optionally, that the indication module indicates the type of the SPS PDSCH to the terminal includes: configuring first information for the SPS PDSCH by using a higher-layer parameter, where the first information includes at least one of the following: the type of the SPS PDSCH and a radio network temporary identifier RNTI associated with the SPS PDSCH.

Optionally, if the type of the SPS PDSCH is not configured in the first information of the SPS PDSCH, it indicates that the type of the SPS PDSCH is a unicast SPS PDSCH, or it indicates that the type of the SPS PDSCH corresponds to the RNTI associated with the SPS PDSCH; or if the associated RNTI is not configured in the first information of the SPS PDSCH, it indicates that the RNTI associated with the SPS PDSCH is a preset RNTI, or it indicates that the RNTI associated with the SPS PDSCH corresponds to the type of the SPS PDSCH.

Optionally, an RNTI corresponding to the multicast SPS PDSCH is a group RNTI; or an RNTI corresponding to the unicast SPS PDSCH is a configured scheduling RNTI.

Optionally, the indication module is further configured to: if a plurality of associated RNTIs are configured in the first information of the SPS PDSCH, indicate, by using downlink signaling, an RNTI used by the SPS PDSCH.

Optionally, that the indication module indicates the type of the SPS PDSCH to the terminal includes: configuring a multicast SPS PDSCH by using first signaling, and configuring a unicast SPS PDSCH by using second signaling.

Optionally, that the indication module configures the multicast SPS PDSCH by using the first signaling includes: configuring the multicast SPS PDSCH on a first target resource by using the first signaling, where the first target resource is a resource corresponding to multicast downlink transmission; or configuring the unicast SPS PDSCH on a second target resource by using the second signaling, where the second target resource is a resource corresponding to unicast downlink transmission.

Optionally, the indication module is further configured to: configure an associated RNTI for the multicast SPS PDSCH; or indicate, by using DCI for activating the multicast SPS PDSCH, the RNTI associated with the SPS PDSCH used for multicast transmission.

Optionally, that the indication module indicates the type of the SPS PDSCH to the terminal includes: activating the SPS PDSCH by using target DCI, and indicating, by using the target DCI, the type configured for the activated SPS PDSCH.

Optionally, the target DCI is multicast DCI, and indicates that the activated SPS PDSCH is a multicast SPS PDSCH, where the multicast DCI is scrambled by using a specific RNTI.

Optionally, the target DCI carries indication information, and the indication information indicates the type and/or an associated RNTI of the activated SPS PDSCH.

According to a third aspect, an SPS PDSCH type determining method is provided. The method includes: determining, by a terminal, a type of an SPS PDSCH of the terminal according to an indication of a network side device, where the type includes a multicast SPS PDSCH for multicast transmission or a unicast SPS PDSCH for unicast transmission.

According to a fourth aspect, an SPS PDSCH type determining apparatus is provided, including: a determining module, configured to determine a type of an SPS PDSCH of a terminal according to an indication of a network side device, where the type includes a multicast SPS PDSCH for multicast transmission or a unicast SPS PDSCH for unicast transmission.

According to a fifth aspect, a network side device is provided. The network side device includes a processor, a memory, and a program or an instruction that is stored in the memory and executable on the processor, where when the program or the instruction is executed by the processor, the steps of the method in the first aspect are implemented.

According to a sixth aspect, a terminal is provided. The terminal includes a processor, a memory, and a program or an instruction that is stored in the memory and executable on the processor, where when the program or the instruction is executed by the processor, the steps of the method in the third aspect are implemented.

According to a seventh aspect, a readable storage medium is provided. The readable storage medium stores a program or an instruction, and when the program or the instruction is executed by a processor, the steps of the method in the first aspect or the steps of the method in the third aspect are implemented.

According to an eighth aspect, a chip is provided. The chip includes a processor and a communications interface, the communications interface is coupled to the processor, and the processor is configured to run a program or an instruction of a network side device to implement the method in the first aspect, or the processor is configured to run a program or an instruction of a terminal to implement the method in the third aspect.

According to a ninth aspect, a computer program product is provided. The computer program product includes a processor, a memory, and a program or an instruction that is stored in the memory and executable on the processor, where when the program or the instruction is executed by the processor, the steps of the method in the first aspect are implemented, or the steps of the method in the third aspect are implemented.

In the embodiments of this application, a network side device indicates a type of an SPS PDSCH to a terminal, so that the terminal can learn whether the SPS PDSCH is used for unicast transmission or multicast transmission, and can further perform descrambling and other corresponding processing by using a corresponding RNTI.

### BRIEF DESCRIPTION OF DRAWINGS

FIG. 1 is a block diagram of a wireless communications system to which embodiments of this application can be applied;
FIG. 2 is a schematic flowchart of an SPS PDSCH type indication method according to an embodiment of this application;
FIG. 3 is a schematic structural diagram of an SPS PDSCH type indication apparatus according to an embodiment of this application;
FIG. 4 is a schematic flowchart of an SPS PDSCH type determining method according to an embodiment of this application;
FIG. 5 is a schematic structural diagram of an SPS PDSCH type determining apparatus according to an embodiment of this application;
FIG. 6 is a schematic structural diagram of a communications device according to an embodiment of this application;
FIG. 7 is a schematic structural diagram of hardware of a terminal according to an embodiment of this application; and
FIG. 8 is a schematic structural diagram of hardware of a network side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms "first", "second", and the like are intended to distinguish between similar objects but do not describe a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, the following descriptions describe a new radio (New Radio, NR) system for example purposes, and NR terms are used in most of the following descriptions, although these technologies can also be applied to an application other than an NR system application, for example, a 6^{th} generation (6^{th} Generation, 6G) communications system.

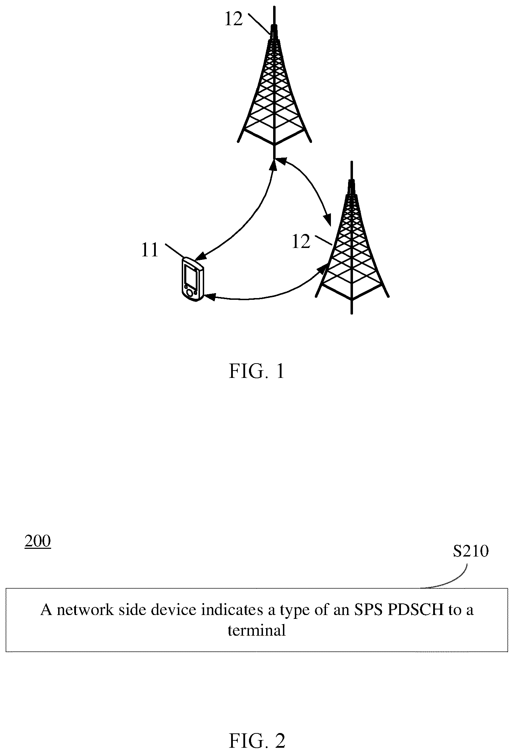

FIG. 1 is a block diagram of a wireless communications system to which embodiments of this application can be applied. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, an SPS PDSCH type indication method provided in the embodiments of this application is described in detail by using specific embodiments and application scenarios.

FIG. 2 is a schematic flowchart of an SPS PDSCH type indication method according to an embodiment of this application. The method 200 may be performed by a network side device. In other words, the method may be performed by software or hardware installed in the network side device. As shown in FIG. 2, the method may include the following steps.

S210: A network side device indicates a type of an SPS PDSCH to a terminal, where the type includes a multicast SPS PDSCH for multicast transmission or a unicast SPS PDSCH for unicast transmission.

In this embodiment of this application, a network side device indicates a type of an SPS PDSCH to a terminal, so that the terminal can learn whether the SPS PDSCH is used for multicast transmission or unicast transmission, and can further learn whether the SPS PDSCH is descrambled by using an RNTI corresponding to multicast or an RNTI corresponding to unicast, or the network side device directly indicates, to the terminal, an RNTI corresponding to the SPS PDSCH, so that the terminal descrambles the SPS PDSCH.

In this embodiment of this application, the SPS PDSCH is PDSCH transmission periodically initiated on a downlink SPS resource. Therefore, the type of the SPS PDSCH may also be referred to as a type of DL SPS, or DL SPS may also be referred to as an SPS PDSCH. This is not distinguished in this embodiment of this application. The type of the DL SPS indicates a type of transmission of the DL SPS resource, that is, indicates whether the DL SPS is used for multicast transmission or unicast transmission. The unicast transmission may represent point-to-point transmission, that is, one sender and one receiver. The multicast transmission may represent point-to-multipoint transmission, that is, one sender and one or more receivers, or may be referred to as multicast transmission (multicast). The multicast transmission may be used to transmit, for example, a multicast/broadcast service.

In a possible implementation, that a network side device indicates a type of an SPS PDSCH to a terminal may include: configuring, by the network side device, first information for the SPS PDSCH by using a higher-layer parameter, where the first information includes at least one of the following: the type of the SPS PDSCH and an RNTI associated with the SPS PDSCH.

The RNTI associated with the SPS PDSCH is the SPS PDSCH.

In the foregoing possible implementation, the network side device may configure the type of the DL SPS when configuring some parameters of the DL SPS by using a higher layer, that is, configure a type of a PDSCH (that is, the SPS PDSCH) initiated on the DL SPS. For example, a parameter indicating the type of the SPS PDSCH may be added to a configuration parameter of the DL SPS.

In the foregoing possible implementation, because an RNTI corresponding to the multicast transmission and an RNTI corresponding to the unicast transmission are different, when the first information is configured by using the higher-layer parameter, the type of the SPS PDSCH may be configured, or the RNTI associated with the SPS PDSCH may be directly configured. The terminal performs processing on the SPS PDSCH scrambled by using the RNTI associated with the SPS PDSCH, or the terminal may determine the type of the SPS PDSCH by using the RNTI associated with the SPS PDSCH. Alternatively, the type of the SPS PDSCH may be configured as the RNTI associated with the SPS PDSCH.

Optionally, if the associated RNTI is not configured in the first information of the SPS PDSCH, it indicates that the RNTI associated with the SPS PDSCH is a preset RNTI, or it indicates that the RNTI associated with the SPS PDSCH corresponds to the type of the SPS PDSCH.

The preset RNTI may be a CS-RNTI, that is, in a case that an associated RNTI is not configured for an SPS PDSCH, the SPS PDSCH is scrambled by using the CS-RNTI by default. Alternatively, if the type of the SPS PDSCH is configured in the first information of the SPS PDSCH, it indicates that the RNTI associated with the SPS PDSCH corresponds to the type of the SPS PDSCH.

Optionally, if the type of the SPS PDSCH is not configured in the first information of the SPS PDSCH, it indicates that the type of the SPS PDSCH is a unicast SPS PDSCH, or it indicates that the type of the SPS PDSCH corresponds to the RNTI associated with the SPS PDSCH.

That is, when a type is not configured for an SPS PDSCH, it indicates that the SPS PDSCH is a default type, where the default type is a unicast SPS PDSCH. Certainly, this is not limited thereto. The default type may be alternatively a multicast SPS PDSCH. Alternatively, if the RNTI associated with the SPS PDSCH is configured in the first information of the SPS PDSCH, it indicates that the type of the SPS PDSCH corresponds to the RNTI associated with the SPS PDSCH.

For example, a unicast SPS PDSCH corresponds to a CS-RNTI, and a multicast SPS PDSCH corresponds to a g-RNTI. The terminal may determine the corresponding RNTI according to the type of the SPS PDSCH. Similarly, the terminal may determine, according to the RNTI associated with the SPS PDSCH, whether the SPS PDSCH is used for multicast transmission or unicast transmission.

For example, in the foregoing possible implementation, if the type of the SPS PDSCH is configured as a multicast SPS PDSCH, the RNTI corresponding to the SPS PDSCH is g-RNTI, or if the SPS type of the SPS PDSCH is a unicast SPS PDSCH, the RNTI corresponding to the type of the SPS PDSCH is a CS-RNTI.

It should be noted that, in this embodiment of this application, the g-RNTI represents an RNTI or a sequence used for transmitting and scrambling a multicast SPS PDSCH, and is different from a CS-RNTI used for a unicast SPS PDSCH. The g-RNTI may be shared by a group of UEs in a multicast service, and a specific name thereof is not limited, for example, may be referred to as a group scheduling RNTI (group scheduling RNTI, gS-RNTI) or a group configured scheduling RNTI (group configured scheduling RNTI, gCS-RNTI).

In a possible implementation, if the network side device configures a plurality of associated RNTIs for the SPS PDSCH in the first information of the SPS PDSCH, the network side device may indicate, by using downlink signaling, an RNTI used by the SPS PDSCH. For example, the network side device may indicate, by using DCI for activating the SPS PDSCH, the RNTI used by the SPS PDSCH, and the terminal may determine, according to the indication of the DCI for activation, the RNTI used for descrambling the SPS PDSCH. Alternatively, the network side device may not perform indication, and the terminal performs blind detection on the SPS PDSCH by using the plurality of RNTIs configured for the SPS PDSCH.

In the foregoing possible implementations, the first information may be configuration information of the SPS PDSCH.

The following uses an example in which the first information is SPS-config or sps-ConfigToAddModList-r16 as an example for description. SPS-config or sps-ConfigToAddModList-r16 is configured in a parameter BWP-DownlinkDedicated, and a cycle, a quantity of hybrid automatic repeat request acknowledgement (Hybrid Automatic Repeat request Acknowledgement, HARQ-ACK) processes (process), a physical uplink control channel (Physical Uplink Control Channel, PUCCH) resource for feeding back a HARQ-ACK, a modulation and coding scheme (Modulation and coding scheme, MCS) table, a configuration index, and the like are configured for each SPS-config. When UE supports a plurality of DL SPSs, one or more SPS-config may be configured by using sps-ConfigToAddModList-r16. In BWP-DownlinkDedicated, only one of sps-Config and sps-ConfigToAddModList-r16 can be configured, that is, one DL SPS is configured through sps-Config or one or more DL SPSs are configured through sps-ConfigToAddModList-r16.

If an MBS service may also be scheduled by using the DL SPS, because a scrambling sequence or initialization of a scrambling sequence corresponding to a multicast PDSCH needs to be a common sequence of multicast UE, for example, a g-RNTI, and different MBS services correspond to different g-RNTIs, for a DL SPS, the UE needs to learn the RNTI used for transmitting the SPS PDSCH, that is, the UE needs to learn whether the RNTI is a CS-RNTI or a g-RNTI. If the RNTI is a g-RNTI, a specific g-RNTI in the plurality of g-RNTIs is determined.

To enable the UE to learn whether the SPS PDSCH is unicast transmission or multicast transmission, or to determine whether information for scrambling the RNTI is a CS-RNTI or a G-RNTI, the network side device may configure the first information by adding a parameter indicating the type and/or the associated RNTI of the SPS PDSCH to SPS-config or sps-ConfigToAddModList-r16.

For example, the following may be added to SPS-config or sps-ConfigTo AddModLi st-r 16:

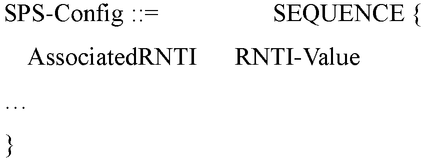

The RNTI-Value is used to indicate the RNTI associated with the SPS PDSCH.

Optionally, a base station may configure one or more associated RNTIs for each DL SPS by using AssociatedRNTI. When one DL SPS is configured with a plurality of RNTIs, the base station may use related signaling, for example, activate DCI, to indicate which RNTI to be used by the SPS PDSCH of the UE, or the UE uses the plurality of configured RNTIs to blindly descramble the PDSCH until the PDSCH can be correctly descrambled or all configured RNTIs are tried.

Optionally, for a DL SPS, the base station may not configure an RNTI associated with the DL SPS. In this case, the UE descrambles the PDSCH by using a default RNTI, for example, a CS-RNTI.

Alternatively, the network side device may configure a multicast DL SPS and a unicast DL SPS by using different signaling, to indicate a type of the configured DL SPS.

Therefore, in another possible implementation, that a network side device indicates a type of an SPS PDSCH to a terminal may include: configuring, by the network side device, a multicast SPS PDSCH by using first signaling, and configuring a unicast SPS PDSCH by using second signaling. That is, in this possible implementation, different types of SPS PDSCHs are configured by using different signaling to indicate the type of the configured SPS PDSCH.

Optionally, the type of the configured SPS PDSCH may be indicated by using a target resource in which the configured SPS PDSCH is located. For example, in a possible implementation, the configuring a multicast SPS PDSCH by using first signaling may include: configuring the multicast SPS PDSCH on a first target resource by using the first signaling, where the first target resource is a resource corresponding to multicast downlink transmission, for example, a bandwidth part (Bandwidth Part, BWP) corresponding to the multicast downlink transmission or a resource block set corresponding to the multicast downlink transmission.

That is, in the foregoing possible implementation, if the SPS PDSCH configured for the first signaling is on the first target resource, it indicates that the multicast SPS PDSCH is configured by using the first signaling, and an associated RNTI of the SPS PDSCH is a g-RNTI. The multicast downlink transmission includes but is not limited to a multicast PDSCH.

In the foregoing possible implementation, the network side device may further configure the associated RNTI for the multicast SPS PDSCH in the first signaling. For example, if the terminal is configured with a plurality of g-RNTIs, the RNTI associated with the multicast SPS PDSCH may be configured in the first signaling.

Alternatively, optionally, the network side device may further indicate, by using the active DCI of the SPS PDSCH, the RNTI associated with the multicast SPS PDSCH.

Optionally, the network side device may configure, by using the first signaling, the RNTI associated with the multicast SPS PDSCH. If there are a plurality of configured RNTIs, the network side device may further indicate, by using the DCI for activating the SPS PDSCH, the RNTI associated with the multicast SPS PDSCH (that is, the RNTI for scrambling the multicast SPS PDSCH), so that the terminal can learn that the RNTI for scrambling the SPS PDSCH, and descramble the SPS PDSCH by using the RNTI, without performing blind detection by using the plurality of configured RNTIs, thereby reducing complexity of descrambling by the terminal.

In a possible implementation, the configuring a unicast SPS PDSCH by using second signaling may include: configuring the unicast SPS PDSCH on a second target resource by using the second signaling, where the second target resource is a resource corresponding to unicast downlink transmission, for example, a BWP corresponding to the unicast downlink transmission.

That is, in the foregoing possible implementation, if the SPS PDSCH configured by using the second signaling is on the resource corresponding to the unicast downlink transmission, it indicates that the SPS PDSCH configured by using the second signaling is a unicast SPS PDSCH, and a corresponding RNTI is a CS-RNTI. The unicast downlink transmission includes but is not limited to a unicast PDSCH.

For example, for unicast PDSCH transmission, the base station configures a UE-dedicated DL BWP, such as a parameter BWP-DownlinkDedicated, for each UE, and configures a DL SPS, such as SPS-config or sps-ConfigToAddModList-r16, in the DL BWP. The UE that receives the multicast PDSCH is further configured with a DL BWP or a DL common resource used for multicast PDSCH transmission, for example, a parameter BWP-DownlinkForMBS or configurationForMBS, and the base station may configure a DL SPS used for multicast transmission in a BWP or a resource in which the multicast PDSCH is located. That is, for an SPS PDSCH, if the SPS PDSCH is configured in BWP-DownlinkDedicated, the SPS PDSCH is a unicast SPS PDSCH, and a corresponding RNTI is a CS-RNTI. If the SPS PDSCH is configured in BWP-DownlinkForMBS or configurationForMBS, the SPS PDSCH is a multicast SPS PDSCH, and a corresponding RNTI is a g-RNTI. If SPSs of different services correspond to different g-RNTs, the base station may further configure, by activating DCI or higher layer signaling, an RNTI value associated with each multicast SPS PDSCH, or the UE performs blind detection.

In still another possible implementation, that a network side device indicates a type of an SPS PDSCH to a terminal may include: activating the SPS PDSCH by using target DCI, and indicating, by using the target DCI, the type configured for the activated SPS PDSCH. That is, in this possible implementation, the type of the SPS PDSCH is indicated by using the DCI for activating the SPS PDSCH (or referred to as DL SPS).

Optionally, if the target DCI is multicast DCI, it indicates that the activated SPS PDSCH is a multicast SPS PDSCH, where the multicast DCI is scrambled by using a specific RNTI. For example, cyclic redundancy check (Cyclic Redundancy Check, CRC) of multicast DCI is scrambled by using a g-RNTI. That is, in this optional implementation, the SPS PDSCH activated by the multicast DCI is a multicast SPS PDSCH. In this possible implementation, a DL SPS is activated by using the multicast DCI, thereby reducing overheads of a physical downlink control channel (Physical downlink control channel, PDCCH). If the target DCI is unicast DCI, it indicates that the activated SPS PDSCH is a unicast SPS PDSCH, where the unicast DCI is scrambled by using a specific RNTI, such as a CS-RNTI.

Alternatively, optionally, the unicast DCI may be used to activate the SPS PDSCH, and the type of the activated SPS PDSCH and/or the RNTI associated with the activated SPS PDSCH are/is indicated by a specific bit field in the unicast DCI.

Certainly, when the multicast DCI is used to activate the multicast SPS PDSCH, the type of the activated SPS PDSCH and/or the RNTI associated with the activated SPS PDSCH are/is indicated by a specific bit field in the multicast DCI. Therefore, optionally, the target DCI carries indication information, and the indication information indicates the type and/or the associated RNTI of the SPS PDSCH.

For example, the UE may be configured with a plurality of g-RNTIs, where each g-RNTI may correspond to one service, or each g-RNTI corresponds to one temporary mobile group identity (Temporary Mobile Group Identity, TMGI). For one candidate SPS PDSCH, the indication information carried in the target DCI may indicate the RNTI associated with the activated SPS PDSCH, that is, an RNTI corresponding to a service transmitted on the activated SPS PDSCH. During descrambling, the terminal may descramble the SPS PDSCH by using the RNTI, without performing blind detection on the SPS PDSCH by using the plurality of g-RNTIs, thereby reducing complexity of descrambling by the UE.

In this embodiment of this application, the g-RNTI may be an RNTI or a sequence used to scramble a multicast DL SPS or activate DCI CRC scrambling of a multicast DL SPS.

For example, in the related art, the DL SPS can only be activated or deactivated by using the unicast DCI, but for a multicast PDSCH, because a group of UEs need to be activated, using the multicast DCI to activate the SPS can reduce PDCCH overheads. However, time for each UE to enter a multicast group may be different. For example, at the start of transmission of a multicast service, if the UE enters the multicast service (for example, an application scenario such as live broadcast), the unicast DCI needs to be used for activation.

Therefore, in a possible implementation of this embodiment of this application, the multicast DL SPS is activated by using the multicast DCI. Optionally, the base station may configure an RNTI, such as a g-RNTI, used by the multicast DL SPS, and one UE may be configured with one or more g-RNTIs. For example, the base station may configure, in the foregoing manner of using the higher-layer parameter, the RNTI used by the multicast DL SPS. When the UE is configured with a plurality of g-RNTIs, in a possible implementation, the DCI for activation indicates the RNTI used for activating the PDSCH of the DL SPS. In another manner, CRC of the DCI for activation may be scrambled by using different RNTIs. The UE determines, according to the RNTI used for scrambling the CRC of the DCI for activation, the RNTI used by the activated PDSCH.

Alternatively, in another possible implementation, the multicast DL SPS may be activated by using the unicast DCI. Optionally, the unicast DCI indicates the RNTI used by the activated SPS PDSCH. Alternatively, the base station may configure an RNTI used by each SPS PDSCH. For example, the base station may configure the RNTI used by the multicast DL SPS in the foregoing manner of using the higher-layer parameter.

It should be noted that the SPS PDSCH type indication method provided in the embodiments of this application may be performed by an SPS PDSCH type indication apparatus, or a control module that is in the SPS PDSCH type indication apparatus and that is used to perform the SPS PDSCH type indication method. In the embodiments of this application, an example in which the SPS PDSCH type indication apparatus performs the SPS PDSCH type indication method is used to describe the SPS PDSCH type indication apparatus provided in the embodiments of this application.

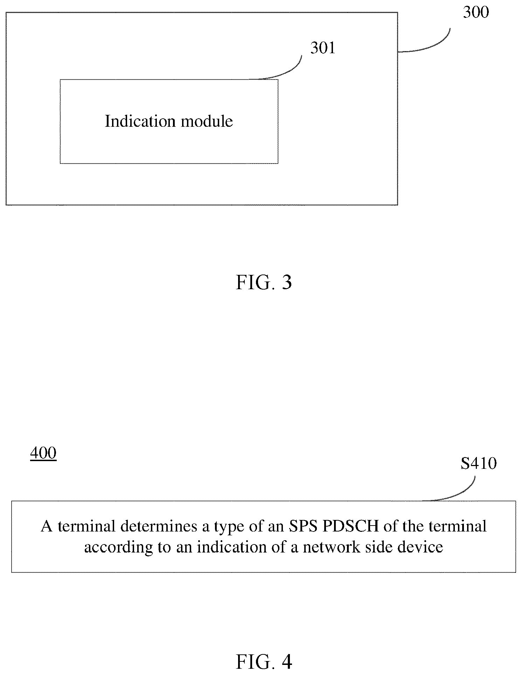

FIG. 3 is a schematic structural diagram of an SPS PDSCH type indication apparatus according to an embodiment of this application. As shown in FIG. 3, an SPS PDSCH type indication apparatus 300 mainly includes an indication module 301.

In this embodiment of this application, the indication module 301 is configured to indicate a type of an SPS PDSCH to a terminal, where the type includes a multicast SPS PDSCH for multicast transmission or a unicast SPS PDSCH for unicast transmission.

In a possible implementation, that the indication module 301 indicates the type of the SPS PDSCH to the terminal includes:
configuring first information for the SPS PDSCH by using a higher-layer parameter, where the first information includes at least one of the following: the type of the SPS PDSCH and a radio network temporary identifier RNTI associated with the SPS PDSCH.

In a possible implementation, if the type of the SPS PDSCH is not configured in the first information of the SPS PDSCH, it indicates that the type of the SPS PDSCH is a unicast SPS PDSCH, or it indicates that the type of the SPS PDSCH corresponds to the RNTI associated with the SPS PDSCH; or if the associated RNTI is not configured in the first information of the SPS PDSCH, it indicates that the RNTI associated with the SPS PDSCH is a preset RNTI, or it indicates that the RNTI associated with the SPS PDSCH corresponds to the type of the SPS PDSCH.

In a possible implementation, an RNTI corresponding to the multicast SPS PDSCH is a group RNTI; or an RNTI corresponding to the unicast SPS PDSCH is a configured scheduling RNTI.

In a possible implementation, the indication module 301 is further configured to:
if a plurality of associated RNTIs are configured in the first information of the SPS PDSCH, indicate, by using downlink signaling, an RNTI used by the SPS PDSCH.

In a possible implementation, that the indication module 301 indicates the type of the SPS PDSCH to the terminal includes:
configuring a multicast SPS PDSCH by using first signaling, and configuring a unicast SPS PDSCH by using second signaling.

In a possible implementation, that the indication module 301 configures the multicast SPS PDSCH by using the first signaling includes:
configuring the multicast SPS PDSCH on a first target resource by using the first signaling, where the first target resource is a resource corresponding to multicast downlink transmission; or
configuring the unicast SPS PDSCH on a second target resource by using the second signaling, where the second target resource is a resource corresponding to unicast downlink transmission.

In a possible implementation, the indication module 301 is further configured to:
configure an associated RNTI for the multicast SPS PDSCH; or
indicate, by using DCI for activating the multicast SPS PDSCH, the RNTI associated with the SPS PDSCH used for multicast transmission.

In a possible implementation, that the indication module 301 indicates the type of the SPS PDSCH to the terminal includes:
activating the SPS PDSCH by using target DCI, and indicating, by using the target DCI, the type configured for the activated SPS PDSCH.

In a possible implementation, the target DCI is multicast DCI, and indicates that the activated SPS PDSCH is a multicast SPS PDSCH, where the multicast DCI is scrambled by using a specific RNTI.

In a possible implementation, the target DCI carries indication information, and the indication information indicates the type and/or an associated RNTI of the activated SPS PDSCH.

The SPS PDSCH type indication apparatus in this embodiment of this application may be an apparatus, or may be a component, an integrated circuit, or a chip in the network side device. The network side device may be a base station. For example, the base station may include but is not limited to the foregoing listed types of the network side device 12. This is not specifically limited in this embodiment of this application.

The SPS PDSCH type indication apparatus in this embodiment of this application may be an apparatus with an operating system. The operating system may be an Android (Android) operating system, an iOS operating system, or another possible operating system. This is not specifically limited in the embodiments of this application.

The SPS PDSCH type indication apparatus provided in this embodiment of this application can implement the processes implemented in the method embodiment in FIG. 2, and achieve a same technical effect. To avoid repetition, details are not described herein again.

FIG. 4 is a schematic flowchart of an SPS PDSCH type determining method according to an embodiment of this application. The method 400 may be performed by a terminal. In other words, the method may be performed by software or hardware installed in the terminal. As shown in FIG. 4, the method may include the following steps.

S410: A terminal determines a type of an SPS PDSCH of the terminal according to an indication of a network side device, where the type includes a multicast SPS PDSCH for multicast transmission or a unicast SPS PDSCH for unicast transmission.

In this embodiment of this application, the network side device may directly indicate the type of the SPS PDSCH to the terminal, to determine an RNTI for scrambling the SPS PDSCH, or the network side device may directly indicate an RNTI corresponding to the SPS PDSCH to the terminal. The terminal may determine, according to the indication of the network side device, the RNTI for scrambling the SPS PDSCH, and descramble the SPS PDSCH by using the corresponding RNTI, and perform other corresponding processing. For example, if HARQ-ACK processing of the multicast SPS PDSCH is different from HARQ-ACK processing of the unicast SPS PDSCH, the UE may further separately perform corresponding HARQ-ACK processing according to the type of the SPS PDSCH.

In this embodiment of this application, a terminal can determine, according to an indication of a network side device, whether an SPS PDSCH of the terminal is used for multicast transmission or unicast transmission, and can further perform descrambling by using an RNTI corresponding to a type of the SPS PDSCH.

In this embodiment of this application, the network side device may indicate the type of the SPS PDSCH of the terminal by using the foregoing method 200. For details, refer to the descriptions in the foregoing method 200.

In this embodiment, the method 400 is a behavior of a terminal side corresponding to the method 200. The following mainly describes the behavior of the terminal side. For other parts corresponding to the method 200, refer to the descriptions in the method 200. Details are not described herein again.

In a possible implementation, after the determining a type of an SPS PDSCH of the terminal in S410, the method further includes: descrambling the SPS PDSCH by using an RNTI corresponding to the type of the SPS PDSCH. For example, if the type of the SPS PDSCH is a multicast SPS PDSCH, the RNTI corresponding to the SPS PDSCH is a g-RNTI, and the SPS PDSCH is descrambled by using the g-RNTI. If the SPS type of the SPS PDSCH is a unicast SPS PDSCH, the RNTI corresponding to the type of the SPS PDSCH is a CS-RNTI, and the SPS PDSCH is descrambled by using the CS-RNTI.

In a possible implementation, the determining a type of an SPS PDSCH of the terminal according to an indication of a network side device may include: determining the type of the SPS PDSCH according to first information that is of the SPS PDSCH and that is configured by a higher layer, where the first information includes at least one of the following: the type of the SPS PDSCH and an RNTI associated with the SPS PDSCH.

The determining the type of the SPS PDSCH according to first information that is of the SPS PDSCH and that is configured by a higher layer includes: if the type of the SPS PDSCH is not configured in the first information of the SPS PDSCH, determining that the SPS PDSCH is a unicast SPS PDSCH, or indicating that the RNTI associated with the SPS PDSCH corresponds to the type of the SPS PDSCH; or if the RNTI associated with the SPS PDSCH is not configured in the first information of the SPS PDSCH, determining that the RNTI associated with the SPS PDSCH is a preset value, or the RNTI associated with the SPS PDSCH corresponds to the type of the SPS PDSCH.

Optionally, an RNTI corresponding to the multicast SPS PDSCH is a group RNTI; or an RNTI corresponding to the unicast SPS PDSCH is a configured scheduling RNTI.

For a manner in which the network side device configures the first information of the SPS PDSCH by using the higher layer, refer to the descriptions of the related possible implementations in the method 200. Details are not described herein again.

In a possible implementation, in a case that a plurality of associated RNTIs are configured in the first information of the SPS PDSCH, or in a case that a plurality of RNTIs are indicated by the first information, for example, the SPS PDSCH configured by using the first information is a multicast SPS PDSCH, and a plurality of corresponding groups RNTI are configured for the multicast SPS PDSCH, if the network side device indicates, by using downlink signaling, an RNTI used by the SPS PDSCH, the RNTI used by the SPS PDSCH is determined according to the indication of the downlink signaling of the network side device, and the SPS PDSCH is descrambled by using the RNTI. If the network side device does not indicate, by using the downlink signaling, the RNTI used by the SPS PDSCH, UE performs blind detection on the SPS PDSCH by using the plurality of RNTIs.

In another possible implementation, the determining a type of an SPS PDSCH of the terminal according to an indication of a network side device may include: determining the type of the SPS PDSCH according to configuration signaling of the SPS PDSCH.

Optionally, the determining the type of the SPS PDSCH according to configuration signaling of the SPS PDSCH includes: if the configuration signaling of the SPS PDSCH is used to configure the SPS PDSCH on a first target resource, determining that the SPS PDSCH is a multicast SPS PDSCH, where the first target resource is a resource corresponding to multicast downlink transmission, for example, a BWP corresponding to the multicast downlink transmission, or a resource block set corresponding to the multicast downlink transmission.; or if the configuration signaling of the SPS PDSCH is used to configure the SPS PDSCH on a second target resource, determining that the SPS PDSCH is a unicast SPS PDSCH, where the second target resource is a resource corresponding to unicast downlink transmission, for example, a BWP corresponding to the unicast downlink transmission.

For a possible implementation in which the network side device indicates the type of the SPS PDSCH by using the configuration signaling of the SPS PDSCH, refer to the descriptions in the foregoing method 200 that the network side device configures the multicast SPS PDSCH by using the first signaling, and configures the unicast SPS PDSCH by using the second signaling. Details are not described herein again.

In still another possible implementation, the determining a type of an SPS PDSCH of the terminal according to an indication of a network side device may include: determining the type of the SPS PDSCH by using target DCI for activating the SPS PDSCH.

For example, optionally, if the target DCI is multicast DCI, it is determined that the SPS PDSCH is a multicast SPS PDSCH.

If the multicast SPS PDSCH is activated by using the multicast DCI, the method may further include: if a plurality of groups RNTIs are configured for the terminal, for the SPS PDSCH, separately descrambling the SPS PDSCH by using the plurality of groups RNTIs.

Alternatively, indication information may be carried in the multicast DCI, and the indication information indicates an RNTI associated with the activated SPS PDSCH. For the SPS PDSCH, the SPS PDSCH is descrambled by using the RNTI indicated by the DCI for activation. For example, a specific bit field in the multicast DCI indicates the RNTI associated with the activated SPS PDSCH.

In a possible implementation, the SPS PDSCH may also be activated by using unicast DCI, where the unicast DCI may carry indication information indicating the type of the activated SPS PDSCH and/or an RNTI associated with the SPS PDSCH.

For example, if the unicast SPS PDSCH is activated by using the unicast DCI, the unicast DCI may carry indication information indicating that the type of the SPS PDSCH is a unicast SPS PDSCH, and the terminal may determine, according to the indication of the indication information, to descramble the activated SPS PDSCH by using the CS-RNTI. Alternatively, the unicast DCI may carry indication information indicating that the RNTI associated with the SPS PDSCH is a CS-RNTI, and the terminal may determine, according to the indication of the indication information, that the type of the activated SPS PDSCH is a unicast SPS PDSCH, and descramble the activated SPS PDSCH by using the CS-RNTI. Alternatively, the unicast DCI may carry indication information indicating that the type of the SPS PDSCH is a unicast SPS PDSCH and indication information indicating that the RNTI associated with the SPS PDSCH is a CS-RNTI, and the terminal may determine, according to the indication of the indication information, that the type of the activated SPS PDSCH is a unicast SPS PDSCH, and descramble the activated SPS PDSCH by using the indicated CS-RNTI.

For another example, if the multicast SPS PDSCH is activated by the unicast DCI, the unicast DCI may carry indication information indicating that the type of the SPS PDSCH is a multicast SPS PDSCH, and the terminal may determine, according to the indication of the indication information, to descramble the activated SPS PDSCH by using the g-RNTI. Alternatively, the unicast DCI may carry indication information indicating that the RNTI associated with the SPS PDSCH is a g-RNTI, and the terminal may determine, according to the indication of the indication information, that the type of the activated SPS PDSCH is a multicast SPS PDSCH, and descramble the activated SPS PDSCH by using the indicated RNTI. Alternatively, the unicast DCI may simultaneously carry indication information indicating that the type of the SPS PDSCH is a multicast SPS PDSCH and indication information indicating that the RNTI associated with the SPS PDSCH is a g-RNTI (which is a g-RNTI used by the SPS PDSCH if there are a plurality of g-RNTIs), and the terminal may determine, according to the indication of the indication information, that the type of the activated SPS PDSCH is a unicast SPS PDSCH, and descramble the activated SPS PDSCH by using the indicated g-RNTI.

It should be noted that the SPS PDSCH type determining method provided in the embodiments of this application may be performed by an SPS PDSCH type determining apparatus, or a control module that is in the SPS PDSCH type determining apparatus and that is used to perform the SPS PDSCH type determining method. In the embodiments of this application, an example in which the SPS PDSCH type determining apparatus performs the SPS PDSCH type determining method is used to describe the SPS PDSCH type determining apparatus provided in the embodiments of this application.

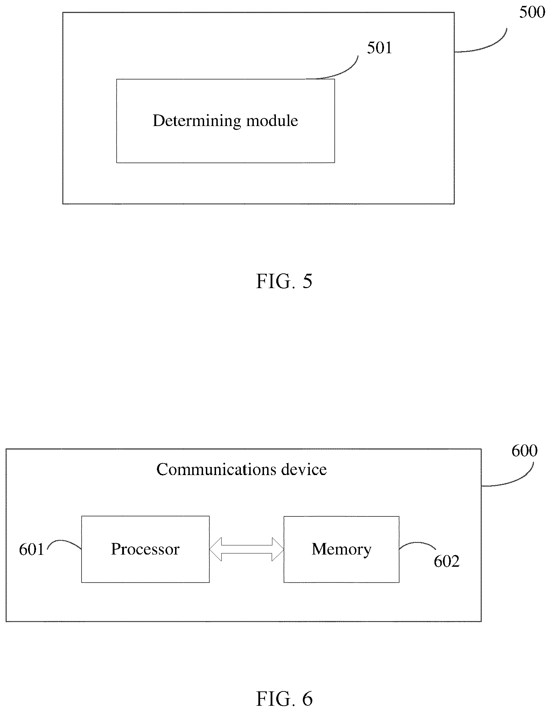

FIG. 5 is a schematic structural diagram of an SPS PDSCH type determining apparatus according to an embodiment of this application. As shown in FIG. 5, the SPS PDSCH type determining apparatus mainly includes a determining module 501.

In this embodiment of this application, the determining module 501 is configured to determine a type of an SPS PDSCH of a terminal according to an indication of a network side device, where the type includes a multicast SPS PDSCH for multicast transmission or a unicast SPS PDSCH for unicast transmission.

In a possible implementation, that the determining module 501 determines the type of the SPS PDSCH of the terminal includes:
determining the type of the SPS PDSCH according to first information that is of the SPS PDSCH and that is configured by a higher layer, where the first information includes at least one of the following: the type of the SPS PDSCH and an RNTI associated with the SPS PDSCH.

In a possible implementation, that the determining module 501 determines the type of the SPS PDSCH according to the first information that is of the SPS PDSCH and that is configured by the higher layer includes:
if the type of the SPS PDSCH is not configured in the first information of the SPS PDSCH, determining that the SPS PDSCH is a unicast SPS PDSCH, or indicating that the RNTI associated with the SPS PDSCH corresponds to the type of the SPS PDSCH; or
if the RNTI associated with the SPS PDSCH is not configured in the first information of the SPS PDSCH, determining that the RNTI associated with the SPS PDSCH is a preset value, or the RNTI associated with the SPS PDSCH corresponds to the type of the SPS PDSCH.

In a possible implementation, an RNTI corresponding to the multicast SPS PDSCH is a group RNTI; or an RNTI corresponding to the unicast SPS PDSCH is a configured scheduling RNTI.

In a possible implementation, the determining module 501 is further configured to:
if a plurality of associated RNTIs are configured in the first information of the SPS PDSCH, determine, according to an indication of downlink signaling of the network side device, an RNTI used by the SPS PDSCH.

In a possible implementation, that the determining module 501 determines the type of the SPS PDSCH of the terminal includes:
determining the type of the SPS PDSCH according to configuration signaling of the SPS PDSCH.

In a possible implementation, that the determining module 501 determines the type of the SPS PDSCH according to the configuration signaling of the SPS PDSCH includes:
if the configuration signaling of the SPS PDSCH is used to configure the SPS PDSCH on a first target resource, determining that the SPS PDSCH is a multicast SPS PDSCH, where the first target resource is a resource corresponding to multicast downlink transmission; or
if the configuration signaling of the SPS PDSCH is used to configure the SPS PDSCH on a second target resource, determining that the SPS PDSCH is a unicast SPS PDSCH, where the second target resource is a resource corresponding to unicast downlink transmission.

In a possible implementation, that the determining module 501 determines the type of the SPS PDSCH of the terminal includes:
determining the type of the SPS PDSCH by using target DCI for activating the SPS PDSCH.

In a possible implementation, that the determining module 501 determines the type of the SPS PDSCH of the terminal according to the indication of the network side device includes
if the target DCI is multicast DCI, determining that the SPS PDSCH is a multicast SPS PDSCH.

In a possible implementation, the determining module 501 is further configured to:
If a plurality of groups RNTIs are configured for the terminal, for a candidate physical downlink shared channel PDSCH of the SPS PDSCH, separately descramble the candidate PDSCH by using the plurality of groups RNTIs.

In a possible implementation, the target DCI carries indication information, and the indication information indicates the type and/or an associated RNTI of the SPS PDSCH.

In a possible implementation, the determining module 501 is further configured to:
for the SPS PDSCH, descramble the SPS PDSCH by using the RNTI corresponding to the indication information carried in the target DCI.

The SPS PDSCH type determining apparatus in this embodiment of this application may be an apparatus, or may be a component, an integrated circuit, or a chip in the terminal. The apparatus may be a mobile terminal, or a non-mobile terminal. For example, the mobile device may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application.

The SPS PDSCH type determining apparatus in this embodiment of this application may be an apparatus with an operating system. The operating system may be an Android (Android) operating system, an iOS operating system, or another possible operating system. This is not specifically limited in the embodiments of this application.

The SPS PDSCH type determining apparatus provided in this embodiment of this application can implement the processes implemented in the method embodiment in FIG. 4, and achieve a same technical effect. To avoid repetition, details are not described herein again.

Optionally, as shown in FIG. 6, an embodiment of this application further provides a communications device 600, including a processor 601, a memory 602, and a program or an instruction that is stored in the memory 602 and executable on the processor 601. For example, when the communications device 600 is a terminal, the program or the instruction is executed by the processor 601 to implement the processes of the foregoing SPS PDSCH type determining method embodiment, and a same technical effect can be achieved. When the communications device 600 is a network side device, the program or the instruction is executed by the processor 601 to implement the processes of the foregoing SPS PDSCH type indication method embodiment, and a same technical effect can be achieved. To avoid repetition, details are not described herein again.

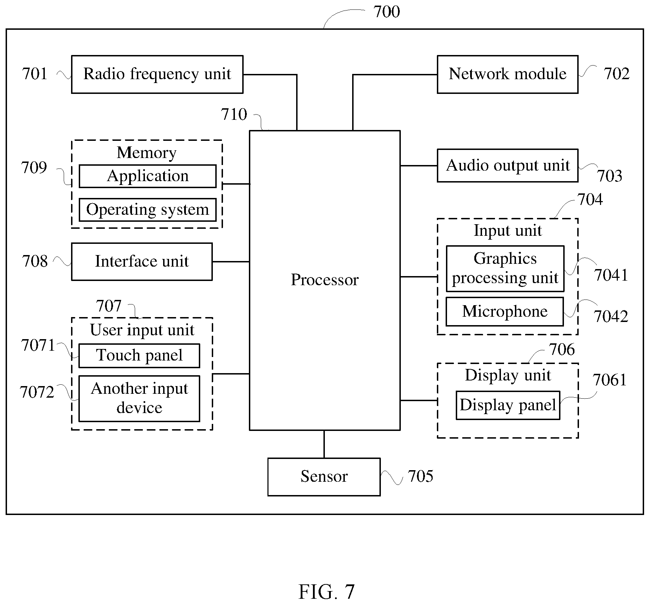

FIG. 7 is a schematic structural diagram of hardware of a terminal according to an embodiment of this application.

A terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

A person skilled in the art can understand that the terminal 700 may further include a power supply (such as a battery) that supplies power to each component. The power supply may be logically connected to the processor 710 by using a power supply management system, to implement functions such as charging and discharging management, and power consumption management by using the power supply management system. The terminal structure shown in FIG. 7 constitutes no limitation on the terminal, and the terminal may include more or fewer components than those shown in the figure, or combine some components, or have different component arrangements. Details are not described herein.

It should be understood that, in this embodiment of this application, the input unit 704 may include a graphics processing unit (Graphics Processing Unit, GPU) 7041 and a microphone 7042, and the graphics processing unit 7041 processes image data of a still picture or a video obtained by an image capture apparatus (such as a camera) in a video capture mode or an image capture mode. The display unit 706 may include a display panel 7061. Optionally, the display panel 7061 may be configured in a form such as a liquid crystal display or an organic light-emitting diode. The user input unit 707 includes a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a functional button (such as a volume control button or a power on/off button), a trackball, a mouse, and a joystick. Details are not described herein.

In this embodiment of this application, the radio frequency unit 701 receives downlink data from a network side device and then sends the downlink data to the processor 710 for processing; and sends uplink data to the network side device. Usually, the radio frequency unit 701 includes but is not limited to an antenna, at least one amplifier, a transceiver, a coupler, a low noise amplifier, a duplexer, and the like.

The memory 709 may be configured to store a software program or an instruction and various data. The memory 709 may mainly include a program or instruction storage area and a data storage area. The program or instruction storage area may store an operating system, and an application or an instruction required by at least one function (for example, a sound playing function or an image playing function). In addition, the memory 709 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 710 may include one or more processing units. Optionally, an application processor and a modem processor may be integrated into the processor 710. The application processor mainly processes an operating system, a user interface, an application, an instruction, or the like. The modem processor mainly processes wireless communications, for example, a baseband processor. It can be understood that, alternatively, the modem processor may not be integrated into the processor 710.

The processor 710 is configured to determine a type of an SPS PDSCH of a terminal according to an indication of a network side device, where the type includes a multicast SPS PDSCH for multicast transmission or a unicast SPS PDSCH for unicast transmission.

The terminal can learn, according to the indication of the network side device, whether the SPS PDSCH is used for unicast transmission or multicast transmission, and can further perform descrambling by using a corresponding RNTI.

Optionally, the processor 710 is further configured to determine the type of the SPS PDSCH according to first information that is of the SPS PDSCH and that is configured by a higher layer, where the first information includes at least one of the following: the type of the SPS PDSCH and an RNTI associated with the SPS PDSCH.

Optionally, the processor 710 is further configured to: if the type of the SPS PDSCH is not configured in the first information of the SPS PDSCH, determine that the SPS PDSCH is a unicast SPS PDSCH, or determine that the RNTI associated with the SPS PDSCH corresponds to the type of the SPS PDSCH; or
if the RNTI associated with the SPS PDSCH is not configured in the first information of the SPS PDSCH, determine that the RNTI associated with the SPS PDSCH is a preset value, or the RNTI associated with the SPS PDSCH corresponds to the type of the SPS PDSCH.

Optionally, the processor 710 is further configured to: if a plurality of associated RNTIs are configured in the first information of the SPS PDSCH, determine, according to an indication of downlink signaling of the network side device, an RNTI used by the SPS PDSCH.

Optionally, the processor 710 is further configured to determine the type of the SPS PDSCH according to configuration signaling of the SPS PDSCH.

Optionally, the processor 710 is further configured to: if the configuration signaling of the SPS PDSCH is used to configure the SPS PDSCH on a first target resource, determine that the SPS PDSCH is a multicast SPS PDSCH, where the first target resource is a resource corresponding to multicast downlink transmission; or
if the configuration signaling of the SPS PDSCH is used to configure the SPS PDSCH on a second target resource, determine that the SPS PDSCH is a unicast SPS PDSCH, where the second target resource is a resource corresponding to unicast downlink transmission.

Optionally, the processor 710 is further configured to determine the type of the SPS PDSCH by using target DCI for activating the SPS PDSCH.

Optionally, the processor 710 is further configured to: if the target DCI is multicast DCI, determine that the SPS PDSCH is a multicast SPS PDSCH.

Optionally, the processor 710 is further configured to: if a plurality of groups RNTIs are configured for the terminal, for the SPS PDSCH, separately descramble the SPS PDSCH by using the plurality of groups RNTIs.

Optionally, the processor 710 is further configured to: for the SPS PDSCH, descramble the SPS PDSCH by using the RNTI corresponding to the indication information carried in the target DCI.

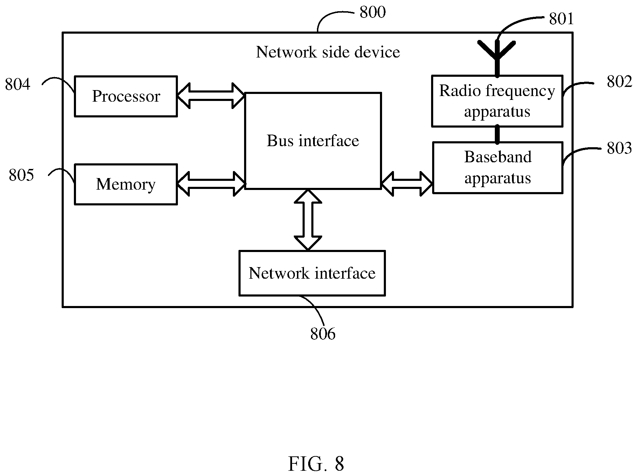

Specifically, an embodiment of this application further provides a network side device. As shown in FIG. 8, a network device 800 includes an antenna 801, a radio frequency apparatus 802, and a baseband apparatus 803. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes information that needs to be sent, and sends processed information to the radio frequency apparatus 802. The radio frequency apparatus 802 processes the received information, and sends processed information by using the antenna 801.

The frequency band processing apparatus may be located in the baseband apparatus 803. The method performed by the network side device in the foregoing embodiment may be implemented in the baseband apparatus 803. The baseband apparatus 803 includes a processor 804 and a memory 805.

The baseband apparatus 803 may include, for example, at least one baseband board, where a plurality of chips are disposed on the baseband board. As shown in FIG. 8, one chip is, for example, the processor 804, which is connected to the memory 805, so as to invoke a program in the memory 805 to perform operations of the network device shown in the foregoing method embodiment.

The baseband apparatus 803 may further include a network interface 806, configured to exchange information with the radio frequency apparatus 802. For example, the interface is a common public radio interface (common public radio interface, CPRI for short).

Specifically, the network side device in this embodiment of this application further includes an instruction or a program that is stored in the memory 805 and executable on the processor 804. The processor 804 invokes the instruction or the program in the memory 805 to perform the method performed by the modules shown in FIG. 3, and a same technical effect is achieved. To avoid repetition, details are not described herein again.

An embodiment of this application further provides a readable storage medium. The readable storage medium stores a program or an instruction, and when the program or the instruction is executed by a processor, the processes of the foregoing SPS PDSCH type determining method embodiment are implemented, or when the program or the instruction is executed by a processor, the processes of the foregoing SPS PDSCH type indication method embodiment are implemented and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction of a network side device to implement the processes of the foregoing SPS PDSCH type indication method embodiment, and a same technical effect can be achieved; or the processor is configured to run a program or an instruction of a terminal to implement the processes of the foregoing SPS PDSCH type determining method embodiment, and a same technical effect can be achieved to avoid repetition, and details are not described herein again.

It should be understood that the chip mentioned in this embodiment of this application may also be referred to as a system-level chip, a system chip, a chip system, or an on-chip system chip.

An embodiment of this application further provides a computer program product. The computer program product includes a processor, a memory, and a program or instruction that is stored in the memory and executable on the processor. When the program or the instruction is executed by the processor, the processes of the SPS PDSCH type indication method embodiment or the processes of the SPS PDSCH type determining method embodiment are implemented, and a same technical effect can be achieved. To avoid repetition, details are not described herein again.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "including a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A semi-persistent scheduling SPS physical downlink shared channel PDSCH type indication method, comprising:
indicating, by a network side device, a type of an SPS PDSCH to a terminal, wherein the type comprises a multicast SPS PDSCH for multicast transmission or a unicast SPS PDSCH for unicast transmission.

2. The method according to claim 1, wherein the indicating, by a network side device, a type of an SPS PDSCH to a terminal comprises:
configuring, by the network side device, first information for the SPS PDSCH by using a higher-layer parameter, wherein the first information comprises at least one of following: the type of the SPS PDSCH and a radio network temporary identifier RNTI associated with the SPS PDSCH.

3. The method according to claim 2, wherein if the type of the SPS PDSCH is not configured in the first information of the SPS PDSCH, it indicates that the type of the SPS PDSCH is a unicast SPS PDSCH, or it indicates that the type of the SPS PDSCH corresponds to the RNTI associated with the SPS PDSCH.

4. The method according to claim 2, wherein if the associated RNTI is not configured in the first information of the SPS PDSCH, it indicates that the RNTI associated with the SPS PDSCH is a preset RNTI, or it indicates that the RNTI associated with the SPS PDSCH corresponds to the type of the SPS PDSCH.

5. The method according to any one of claims 2 to 4, wherein
an RNTI corresponding to the multicast SPS PDSCH is a group RNTI; and/or
an RNTI corresponding to the unicast SPS PDSCH is a configured scheduling RNTI.

6. The method according to claim 2, wherein the method further comprises:
if a plurality of associated RNTIs are configured in the first information of the SPS PDSCH, indicating, by using downlink signaling, an RNTI used by the SPS PDSCH.

7. The method according to claim 1, wherein the indicating, by a network side device, a type of an SPS PDSCH to a terminal comprises:
configuring, by the network side device, a multicast SPS PDSCH by using first signaling, and configuring a unicast SPS PDSCH by using second signaling.

8. The method according to claim 7, wherein the configuring a multicast SPS PDSCH by using first signaling comprises:
configuring the multicast SPS PDSCH on a first target resource by using the first signaling, wherein the first target resource is a resource corresponding to multicast downlink transmission.

9. The method according to claim 7 or 8, wherein the method further comprises:
configuring an associated RNTI for the multicast SPS PDSCH in the first signaling; and/or
indicating, by using downlink control information DCI for activating the multicast SPS PDSCH, the RNTI associated with the multicast SPS PDSCH.

10. The method according to claim 7, wherein the configuring a unicast SPS PDSCH by using second signaling comprises:
configuring the unicast SPS PDSCH on a second target resource by using the second signaling, wherein the second target resource is a resource corresponding to unicast downlink transmission.

11. The method according to claim 1, wherein the indicating, by a network side device, a type of an SPS PDSCH to a terminal comprises:
activating the SPS PDSCH by using target DCI, and indicating, by using the target DCI, the type configured for the activated SPS PDSCH.

12. The method according to claim 11, wherein the target DCI is multicast DCI, and indicates that the activated SPS PDSCH is a multicast SPS PDSCH, wherein the multicast DCI is scrambled by using a specific RNTI.

13. The method according to claim 12, wherein the specific RNTI comprises a group RNTI.

14. The method according to any one of claims 11 to 13, wherein the target DCI carries indication information, and the indication information indicates the type and/or an associated RNTI of the activated SPS PDSCH.

15. An SPS PDSCH type determining method, comprising:
determining, by a terminal, a type of an SPS PDSCH of the terminal according to an indication of a network side device, wherein the type comprises a multicast SPS PDSCH for multicast transmission or a unicast SPS PDSCH for unicast transmission.

16. The method according to claim 15, wherein the determining a type of an SPS PDSCH of the terminal according to an indication of a network side device comprises:
determining the type of the SPS PDSCH according to first information that is of the SPS PDSCH and that is configured by a higher layer, wherein the first information comprises at least one of following: the type of the SPS PDSCH and an RNTI associated with the SPS PDSCH.

17. The method according to claim 16, wherein the determining the type of the SPS PDSCH according to first information that is of the SPS PDSCH and that is configured by a higher layer comprises:
if the type of the SPS PDSCH is not configured in the first information of the SPS PDSCH, determining that the SPS PDSCH is a unicast SPS PDSCH, or determining that the RNTI associated with the SPS PDSCH corresponds to the type of the SPS PDSCH; or
if the RNTI associated with the SPS PDSCH is not configured in the first information of the SPS PDSCH, determining that the RNTI associated with the SPS PDSCH is a preset value, or determining that the RNTI associated with the SPS PDSCH corresponds to the type of the SPS PDSCH.

18. The method according to claim 16 or 17, wherein
an RNTI corresponding to the multicast SPS PDSCH is a group RNTI; or
an RNTI corresponding to the unicast SPS PDSCH is a configured scheduling RNTI.

19. The method according to claim 16, wherein the method further comprises:
if a plurality of associated RNTIs are configured in the first information of the SPS PDSCH, determining, according to an indication of downlink signaling of the network side device, an RNTI used by the SPS PDSCH.

20. The method according to claim 15, wherein the determining a type of an SPS PDSCH of the terminal according to an indication of a network side device comprises:
determining the type of the SPS PDSCH according to configuration signaling of the SPS PDSCH.

21. The method according to claim 20, wherein the determining the type of the SPS PDSCH according to configuration signaling of the SPS PDSCH comprises:
if the configuration signaling of the SPS PDSCH is used to configure the SPS PDSCH on a first target resource, determining that the SPS PDSCH is a multicast SPS PDSCH, wherein the first target resource is a resource corresponding to multicast downlink transmission; or
if the configuration signaling of the SPS PDSCH is used to configure the SPS PDSCH on a second target resource, determining that the SPS PDSCH is a unicast SPS PDSCH, wherein the second target resource is a resource corresponding to unicast downlink transmission.

22. The method according to claim 15, wherein the determining a type of an SPS PDSCH of the terminal according to an indication of a network side device comprises:
determining the type of the SPS PDSCH by using target DCI for activating the SPS PDSCH.

23. The method according to claim 22, wherein the determining a type of an SPS PDSCH of the terminal according to an indication of a network side device comprises:
if the target DCI is multicast DCI, determining that the SPS PDSCH is a multicast SPS PDSCH.

24. The method according to claim 23, wherein the method further comprises:
if a plurality of groups RNTIs are configured for the terminal, for the SPS PDSCH, separately descrambling the SPS PDSCH by using the plurality of groups RNTIs.

25. The method according to any one of claims 22 to 24, wherein the target DCI carries indication information, and the indication information indicates the type of the SPS PDSCH and/or an RNTI associated with the SPS PDSCH.

26. The method according to claim 25, wherein the method further comprises:
for the SPS PDSCH, descrambling the SPS PDSCH by using the RNTI corresponding to the indication information carried in the target DCI.

27. An SPS PDSCH type indication apparatus, comprising:
an indication module, configured to indicate a type of an SPS PDSCH to a terminal, wherein the type comprises a multicast SPS PDSCH for multicast transmission or a unicast SPS PDSCH for unicast transmission.

28. An SPS PDSCH type determining apparatus, comprising:
a determining module, configured to determine a type of an SPS PDSCH of a terminal according to an indication of a network side device, wherein the type comprises a multicast SPS PDSCH for multicast transmission or a unicast SPS PDSCH for unicast transmission.

29. The apparatus according to claim 28, wherein that the determining module determines the type of the SPS PDSCH of the terminal comprises:
determining the type of the SPS PDSCH according to first information that is of the SPS PDSCH and that is configured by a higher layer, wherein the first information comprises at least one of following: the type of the SPS PDSCH and an RNTI associated with the SPS PDSCH.

30. The method according to claim 29, wherein that the determining module determines the type of the SPS PDSCH according to the first information that is of the SPS PDSCH and that is configured by the higher layer comprises:
if the type of the SPS PDSCH is not configured in the first information of the SPS PDSCH, determining that the SPS PDSCH is a unicast SPS PDSCH, or determining that the RNTI associated with the SPS PDSCH corresponds to the type of the SPS PDSCH; or
if the RNTI associated with the SPS PDSCH is not configured in the first information of the SPS PDSCH, determining that the RNTI associated with the SPS PDSCH is a preset value, or determining that the RNTI associated with the SPS PDSCH corresponds to the type of the SPS PDSCH.

31. The apparatus according to claim 29 or 30, wherein
an RNTI corresponding to the multicast SPS PDSCH is a group RNTI; or
an RNTI corresponding to the unicast SPS PDSCH is a configured scheduling RNTI.

32. The apparatus according to claim 28, wherein the determining module is further configured to:
if a plurality of associated RNTIs are configured in the first information of the SPS PDSCH, determine, according to an indication of downlink signaling of the network side device, an RNTI used by the SPS PDSCH.

33. The apparatus according to claim 28, wherein that the determining module determines the type of the SPS PDSCH of the terminal comprises:
determining the type of the SPS PDSCH according to configuration signaling of the SPS PDSCH.

34. The method according to claim 33, wherein that the determining module determines the type of the SPS PDSCH according to the configuration signaling of the SPS PDSCH comprises:
if the configuration signaling of the SPS PDSCH is used to configure the SPS PDSCH on a first target resource, determining that the SPS PDSCH is a multicast SPS PDSCH, wherein the first target resource is a resource corresponding to multicast downlink transmission; or
if the configuration signaling of the SPS PDSCH is used to configure the SPS PDSCH on a second target resource, determining that the SPS PDSCH is a unicast SPS PDSCH, wherein the second target resource is a resource corresponding to unicast downlink transmission.

35. The apparatus according to claim 28, wherein that the determining module determines the type of the SPS PDSCH of the terminal comprises:
determining the type of the SPS PDSCH by using target DCI for activating the SPS PDSCH.

36. The method according to claim 35, wherein that the determining module determines the type of the SPS PDSCH of the terminal according to the indication of the network side device comprises:
if the target DCI is multicast DCI, determining that the SPS PDSCH is a multicast SPS PDSCH.

37. The apparatus according to claim 36, wherein the determining module is further configured to:
If a plurality of groups RNTIs are configured for the terminal, for a candidate physical downlink shared channel PDSCH of the SPS PDSCH, separately descrambling the candidate PDSCH by using the plurality of groups RNTIs.

38. The apparatus according to any one of claims 35 to 37, wherein the target DCI carries indication information, and the indication information indicates the type and/or an associated RNTI of the SPS PDSCH.

39. The apparatus according to claim 38, wherein the determining module is further configured to:
for the SPS PDSCH, descramble the SPS PDSCH by using the RNTI corresponding to the indication information carried in the target DCI.

40. A network side device, comprising a processor, a memory, and a program or an instruction that is stored in the memory and executable on the processor, wherein when the program or the instruction is executed by the processor, the steps of the semi-persistent scheduling physical downlink shared channel type indication method according to any one of claims 1 to 14 are implemented.

41. A terminal, comprising a processor, a memory, and a program or an instruction that is stored in the memory and executable on the processor, wherein when the program or the instruction is executed by the processor, the steps of the semi-persistent scheduling physical downlink shared channel type determining method according to any one of claims 15 to 26 are implemented.

42. A readable storage medium, wherein a program or instruction is stored on the readable storage medium, and when the program or the instruction is executed by a processor, the steps of the semi-persistent scheduling physical downlink shared channel type indication method according to any one of claims 1 to 14 are implemented, or the steps of the semi-persistent scheduling physical downlink shared channel type determining method according to any one of claims 15 to 26 are implemented.
